# EUROPEAN PATENT SPECIFICATION

(11) **EP 3 273 389 B1**
(45) Date of publication and mention of the grant of the patent: **17.02.2021**
(21) Application number: 16767661.8
(22) Date of filing: 02.03.2016
(51) Int. Cl.: G06K 17/00, G06K 7/10

(54) **ITEM CHECKING SYSTEM, AND ITEM CHECKING HANDLING METHOD AND APPARATUS**
ARTIKELKONTROLLSYSTEM SOWIE HANDHABUNGSVERFAHREN UND - VORRICHTUNG DER ARTIKELKONTROLLE
SYSTÈME DE VÉRIFICATION D'ARTICLES, ET PROCÉDÉ ET APPAREIL DE GESTION DE LA VÉRIFICATION D'ARTICLES

(30) Priority: 20.03.2015 CN 201510126573
(43) Date of publication of application: 24.01.2018
(73) Proprietor: ZTE Corporation, Shenzhen, Guangdong 518057 (CN)
(72) Inventor: XU, Jidong, Shenzhen Guangdong 518057 (CN); FU, Zhiming, Shenzhen Guangdong 518057 (CN); WANG, Ying, Shenzhen Guangdong 518057 (CN)
(74) Representative: Aipex B.V.
(86) International application number: PCT/CN2016/075367
(87) International publication number: WO 2016/150284

(56) References cited:
- CN-A- 101 075 306
- CN-A- 103 384 889
- CN-A- 103 714 369
- CN-A- 104 036 316
- US-A1- 2010 096 447

## Description

### TECHNICAL FIELD

The present invention relates to the field of communications and, in particular, to an item checking system, an item checking handling method and an item checking handling apparatus.

### BACKGROUND

As productivity is significantly improved in modern society, products and services are greatly enriched and new energy-saving and fast checking is required especially for warehouse material management. Fast checking is also required for important indoor items in some offices, especially in archives, secret rooms, libraries, etc. An example of RFID-based inventory monitoring system is disclosed in the application CN103384889A, and a super low-power consumption photoactivation electronic tag and carding reading system is disclosed in the application CN104036316A.

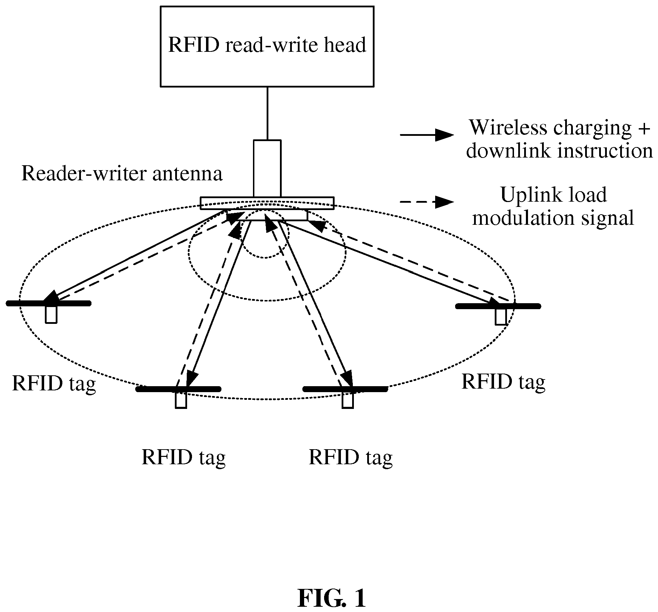

At present, a tag identification technology that can meet such requirements is Radio Frequency Identification (RFID) as illustrated in FIG. 1. This is a point-to-multipoint (P2MP) application scenario that requires installation of RFID reader-writers at an entrance and an exit. In a case of a larger indoor space, the RFID reader-writer needs a larger antenna and greater power, thus resulting in greater power consumption. Moreover, the RFID reader-writer must keep open and such radiation affects a human body. RFID uses radio frequencies for transmission and thus has some disadvantages of radio frequencies. For example, the RFID reader-writer stops working normally when located at electromagnetic radiation sites or exposed to metal devices to which the RFID reader-writer is sensitive. Meanwhile, RFID tags cannot be undersized due to the antenna. Therefore, RFID is limited in many places.

An effective solution remains to be provided to solve problems such as great power consumption, a great harm to the human body, a limited working environment, etc. in the RFID tag technology of the related art.

### SUMMARY

To solve the above problems, embodiments of the present invention provide an item checking system according to claim 1 and item checking handling methods according to claims 7 and 8.

According to one embodiment of the present invention, provided is an item checking system, including: an optoelectronic identification (OEID) read-write apparatus, which is arranged on a light source in a designated space, and is configured to deliver a query instruction to an OEID tag arranged on an item in the designated space via a light signal transmitted by the light source, identify the item according to uplink data fed back by the OEID tag, and send an identification result to a monitoring terminal; where the OEID tag is configured to send the uplink data to the OEID read-write apparatus under trigger of the query instruction; and the monitoring terminal is configured to obtain a checking result of the item in the designated space according to the identification result.

In an embodiment of the present invention, one OEID read-write apparatus corresponds to one or more OEID tags.

In an embodiment of the present invention, the OEID read-write apparatus is further configured to read, when one OEID read-write apparatus corresponds to a plurality of OEID tags, an ID identifying the item in the OEID tag until traversal for the plurality of OEID tags are finished.

In an embodiment of the present invention, the OEID read-write apparatus includes a light signal transmitter, a light signal receiver and a control chip which controls running status of the light signal transmitter and the light signal receiver.

In an embodiment of the present invention, the OEID tag is further provided with geographic location information of the item, where the geographic location information comprises an identification of the designated space where the item located.

In an embodiment of the present invention, the OEID read-write apparatus is further configured to broadcast the geographic location information to the OEID tag, and the OEID tag is further configured to add the geographic location information into the OEID tag.

According to another embodiment of the present invention, provided is an item checking handling method, including: delivering a query instruction to an OEID tag arranged on an item in a designated space; receiving uplink data fed back by the OEID tag under trigger of the query instruction, and identifying the item according to the uplink data; and sending an identification result to a monitoring terminal, where the monitoring terminal obtains a checking result of the item in the designated space according to the identification result.

According to yet another embodiment of the present invention, provided is an item checking handling method, including: receiving a query instruction delivered by an OEID read-write apparatus for querying an OEID tag arranged on an item in a designated space; and feeding back uplink data to the OEID read-write apparatus according to the query instruction, where the OEID read-write apparatus identifies the item according to the uplink data and sends an identification result to a monitoring terminal, and the monitoring terminal obtains a checking result of the item in the designated space according to the identification result.

According to still another embodiment of the present invention, provided is an item checking handling apparatus, applied to an OEID read-write apparatus, including a delivering module, which is configured to deliver a query instruction to an OEID tag arranged on an item in a designated space; a receiving module, which is configured to receive uplink data fed back by the OEID tag under trigger of the query instruction; an identifying module, which is configured to identify the item according to the uplink data; and a sending module, which is configured to send an identification result to a monitoring terminal, where the monitoring terminal obtains a checking result of the item in the designated space according to the identification result.

According to yet still another embodiment of the present invention, provided is an item checking handling apparatus, applied to an OEID tag, including a receiving module, which is configured to receive a query instruction delivered by an OEID read-write apparatus for querying an OEID tag arranged on an item in a designated space; and a feedback module, which is configured to feed back uplink data to the OEID read-write apparatus according to the query instruction, where the OEID read-write apparatus identifies the item according to the uplink data and sends an identification result to a monitoring terminal, and the monitoring terminal obtains a checking result of the item in the designated space according to the identification result.

According to embodiments of the present invention, the checking result of the item in the current designated space is obtained based on an interaction process of the OEID read-write apparatus, the OEID tag and the monitoring terminal. This solves problems such as great power consumption, a great harm to the human body, a limited working environment, etc. in the RFID tag technology of the related art, provides contactless and editable read-write for the tag, and satisfies read-write technologies of other tags capable of working normally under various situations.

### BRIEF DESCRIPTION OF DRAWINGS

The accompanying drawings described herein are used to provide a further understanding of the present invention, and form a part of the present application. The schematic embodiments and descriptions thereof of the present invention are used to explain the present invention, and do not form improper limits to the present invention. In the accompanying drawings:
FIG. 1 is a schematic diagram illustrating a basic structure of P2MP of RFID in the related art.
FIG. 2 is a block diagram of an item checking system according to an embodiment of the present invention;
FIG. 3 is a schematic diagram illustrating a basic structure of P2MP of OEID of an LED light according to an embodiment of the present invention;
FIG. 4 is a schematic diagram illustrating a basic structure of a read-write head of an LED light according to an embodiment of the present invention;
FIG. 5 is a schematic diagram illustrating components of an OEID tag according to an embodiment of the present invention;
FIG. 6 is a schematic diagram A illustrating components of an OEID chip according to an embodiment of the present invention;
FIG. 7 is a schematic diagram B illustrating components of an OEID chip according to an embodiment of the present invention;
FIG. 8 is a schematic diagram illustrating a basic structure of P2MP of OEID of two LED lights according to an embodiment of the present invention;
FIG. 9 is a schematic diagram illustrating a basic scenario of OEID implementation according to an embodiment of the present invention;
FIG. 10 is a flowchart of an item checking handling method according to an embodiment of the present invention;
FIG. 11 is a block diagram illustrating a structure of an item checking handling apparatus according to an embodiment of the present invention;
FIG. 12 is another flowchart of an item checking handling method according to an embodiment of the present invention; and
FIG. 13 is a block diagram illustrating a structure of an item checking handling apparatus according to an embodiment of the present invention.

### DETAILED DESCRIPTION

The present invention will be described hereinafter in detail with reference to the accompanying drawings in connection with embodiments. It is to be noted that if not in conflict, embodiments and features therein in the present application may be combined with each other.

Other features and advantages of the present invention will be elaborated hereinafter in the specification, and moreover, partially become apparent from the specification, or will be understood through implementation of the present invention. The object and other advantages of the present invention may be achieved and obtained through structures set forth in the specification, claims and drawings.

Solutions in embodiments of the present invention will be described clearly and completely in connection with the accompanying drawings in embodiments of the present invention from which the solutions will be apparent to those skilled in the art. Embodiments described below are part, not all, of embodiments of the present invention. On the basis of embodiments in the present invention, other embodiments obtained by those skilled in the art without creative work are within the scope of the present invention.

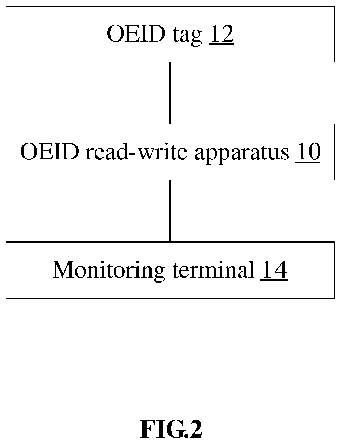

An embodiment of the present invention provides an item checking system. FIG. 2 is a block diagram of the item checking system according to an embodiment of the present invention. As illustrated in FIG. 2, the item checking system includes:
an OEID read-write apparatus 10, which is arranged on a light source in a designated space and is configured to deliver, via a light signal transmitted by the light source, a query instruction to an OEID tag 12 arranged on an item in the designated space, identify the item according to uplink data fed back by the OEID tag 12, and send an identification result to a monitoring terminal 14; the OEID tag 12, which is configured to send the uplink data to the OEID read-write apparatus 10 under trigger of the query instruction; and the monitoring terminal 14, which is configured to obtain a checking result of the item in the designated space according to the identification result.

In the above interaction process, the checking result of the item in the current designated space is obtained based on the interaction process of the OEID read-write apparatus, the OEID tag and the monitoring terminal, thereby solving problems such as great power consumption, a great harm to the human body, a limited working environment, etc. in the RFID tag technology of the related art, providing contactless and editable read-write for the tag, and satisfies read-write technologies of other tags capable of working normally under various situations.

In an embodiment of the present invention, a one-to-one basis is available, that is, one OEID read-write apparatus corresponds to one OEID tag; and a one-to-multiple basis is also available, that is, one OEID read-write apparatus corresponds to multiple OEID tags. When one OEID read-write apparatus corresponds to multiple OEID tags, a point-to-multipoint (P2MP) protocol is used between the OEID read-write apparatus and the OEID tags.

In practical use, the OEID read-write apparatus is further configured to read, when one OEID read-write apparatus corresponds to the multiple OEID tags, an ID identifying the item in the OEID tag until traversal of the multiple OEID tags are finished. The OEID read-write apparatus may read the ID in the OEID tag according to specific rules so as to read all OEID tags easily and quickly.

Optionally, the OEID read-write apparatus is further configured to deliver the query instruction via a visible light signal and send the uplink data via a visible or invisible light signal, preferably invisible light, i.e., infrared light in an embodiment of the present invention, which is transmitted by an infrared LED built into the OEID tag. Such solution of using the invisible light to send the uplink data does not affect an appearance of the item and can report status of the item in real time without being noticed by lawbreakers when the lawbreakers want to steal the item, extending an application scope of the solution of an embodiment of the present invention.

The OEID read-write apparatus includes but is not limited to a light signal transmitter, a light signal receiver and a control chip which controls running status of the light signal transmitter and the light signal receiver. The light source includes but is not limited to an LED light.

To better understand an item flow process, the OEID tag is further provided with geographic location information of the item. The geographic location information in the OEID tag is substantially location information pre-edited by the monitoring terminal. The location information is broadcasted to the OEID tag by OEID read-write apparatus, then the OEID tag may edit the ID information in the OEID tag according to an instruction to add the geographic location information. Such solution allows the OEID tag of the item to have not only item information but also flow process information of the item.

More specifically, the geographic location information includes an identification of the designated space of the item. According to the identification of the designated space in the OEID tag, an environment for the item in the flow process can be obtained and the item can be better further processed.

In view of the above, an embodiment of the present invention has actually proposed a contactless passive optoelectronic tag identifying method. An indoor LED light serves as a read-write head of OEID, some important indoor items are identified by the OEID tags, the LED light is turned on to charge these OEID tags, downlink instruction data are sent via Visible Light Communication (VLC), and the OEID tags send uplink data via infrared LEDs in the OEID tags. The LED light may determine whether these items exist according to received uplink data. Meanwhile, a connected electric wire transmits data to a monitoring computer via Power Line Communication (PLC). The solution of an embodiment of the present invention satisfies a need to check indoor items.

The following is an example of how the overall solution described above is implemented.

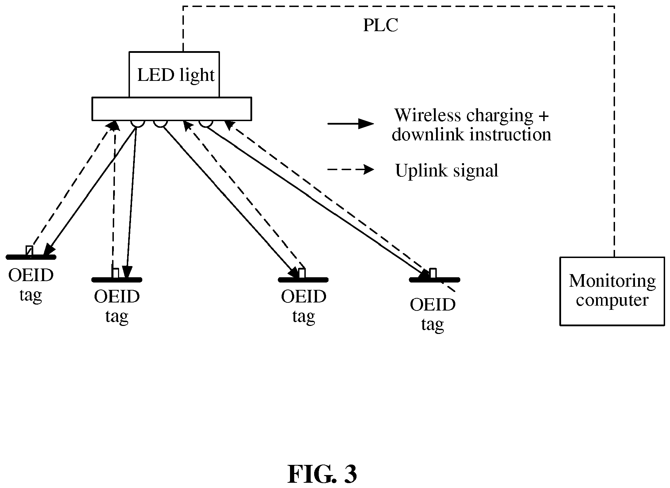

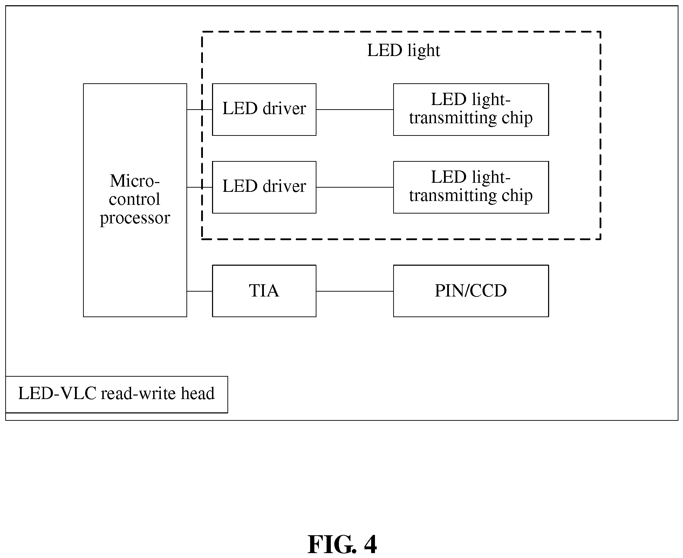

In the solution of an embodiment of the present invention, there is an OEID read-write head formed by one LED light, and several passive OEID tags, specifically as illustrated in FIG. 3. A read-write head includes an LED light transmitter, a light receiver (P intrinsic N (PIN)/Charge-coupled Device (CCD)), a control chip and other modules. FIG. 4 is a schematic diagram illustrating a basic structure of the read-write head. An LED light includes multiple LED chips and thus the LED light is driven by multiple LEDs. The multiple LEDs are separate from each other and typically transmit a same data signal. The read-write head is an active device that may transmit light via the light transmitter to charge the OEID tags or transmit pulsed light to the OEID tags to deliver corresponding data signals. The light receiver is substantially a PIN (or CCD) that substantially receives uplink data signals transmitted by the OEID tags. A micro-control control and treatment chip of the read-write head processes the data signals, controls running status of the LED light transmitter and transmits corresponding information to the OEID tags.

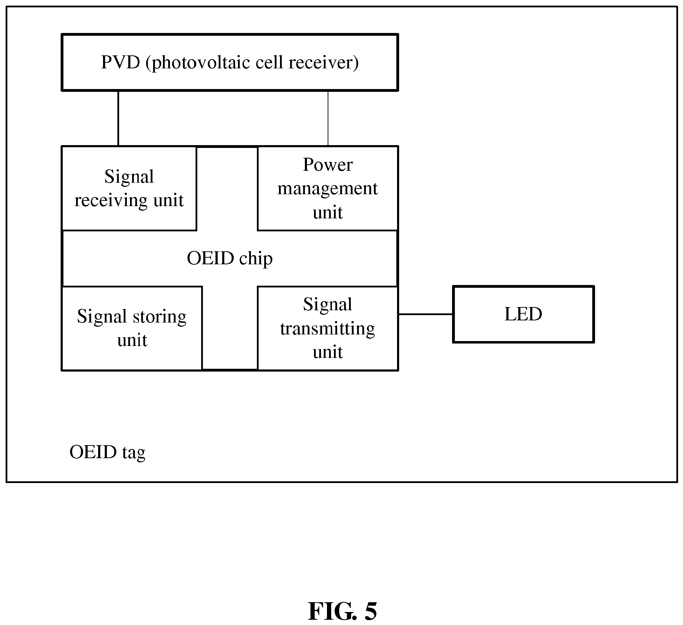

An OEID tag includes a photocell, a light transmitter and an OEID chip. FIG. 5 is a schematic diagram illustrating a basic structure of the OEID tag. First the photocell converts received light into power and supplies the power to a power management unit in the OEID chip. The power management unit stores power in its built-in capacitor and powers the LED light transmitter and a control management unit.

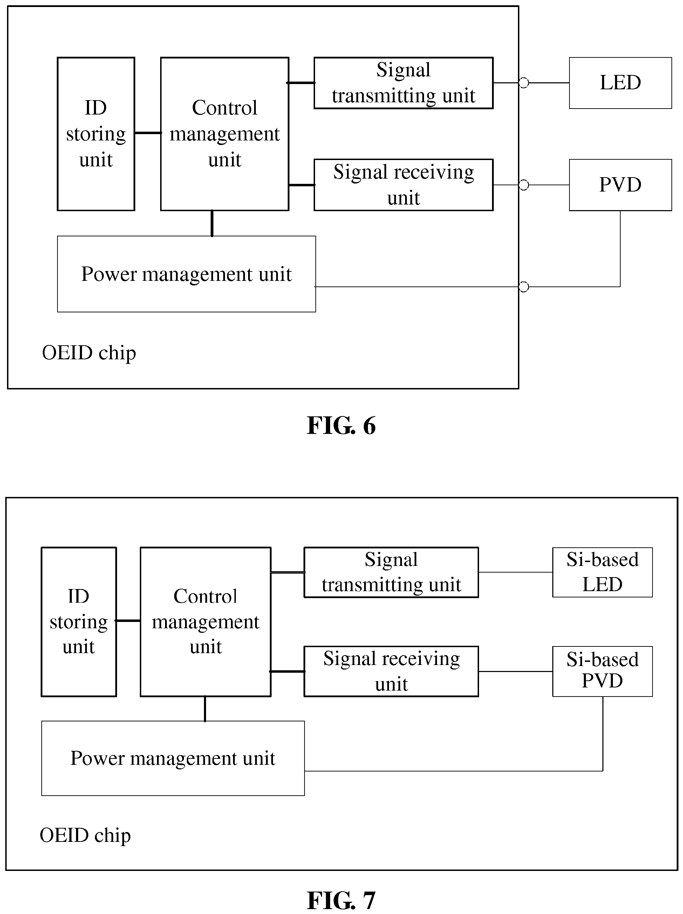

An OEID chip integrates a power management unit with a control management unit via a Complementary Metal Oxide Semiconductor (CMOS) technology, as illustrated in FIG. 6. The power management unit has a capacitor that stores electrical energy. The control management unit manages a signal transmitting unit, a signal receiving unit and an ID storing unit.

An OEID chip may also integrates an LED light transmitter with a Physical Vapor Deposition (PVD) photovoltaic cell receiver via a CMOS technology, as illustrated in FIG. 7. Such configuration allows a smaller chip size and lower power consumption, facilitates assembly and large-scale manufacturing, and reduces manufacturing costs.

The OEID tag is passive. First the read-write head charges the OEID tag by lighting or an external light source charges the OEID tag, and then the read-write head delivers a corresponding instruction to the OEID tag. After receiving the instruction, the OEID tag sends a corresponding response via its own LED (sometimes to make uplink LED light not affect illumination, an infrared LED may be selected as the LED of the OEID tag). After receiving the response, the read-write head processes the response. If information is sufficient, the read-write head notifies the OEID tag of the reception and ends the process. If information is insufficient, the read-write head further delivers an inquiry instruction and the OEID tag further sends a response according to requirements until the read-write head is satisfied.

Here is a P2MP application scenario. One read-write head corresponds to multiple tags. To prevent conflicted uplink information of the tags, the read-write head has a read-write protocol. For example, an OEID tag with a certain number as the last number of the ID is first selected for transmitting, and, if there are still more OEID tags, an OEID tag with two certain numbers as the last number of the ID may be first selected for transmitting, until information of only one tag is received, and then selection is performed successively until IDs of all OEID tags are received. After the first read-write, corresponding data are archived and next read-write will have a target. For example, an OEID tag corresponding to a certain ID may be required to report data. There are various modes of such P2MP protocol, from which an appropriate one may be selected as required.

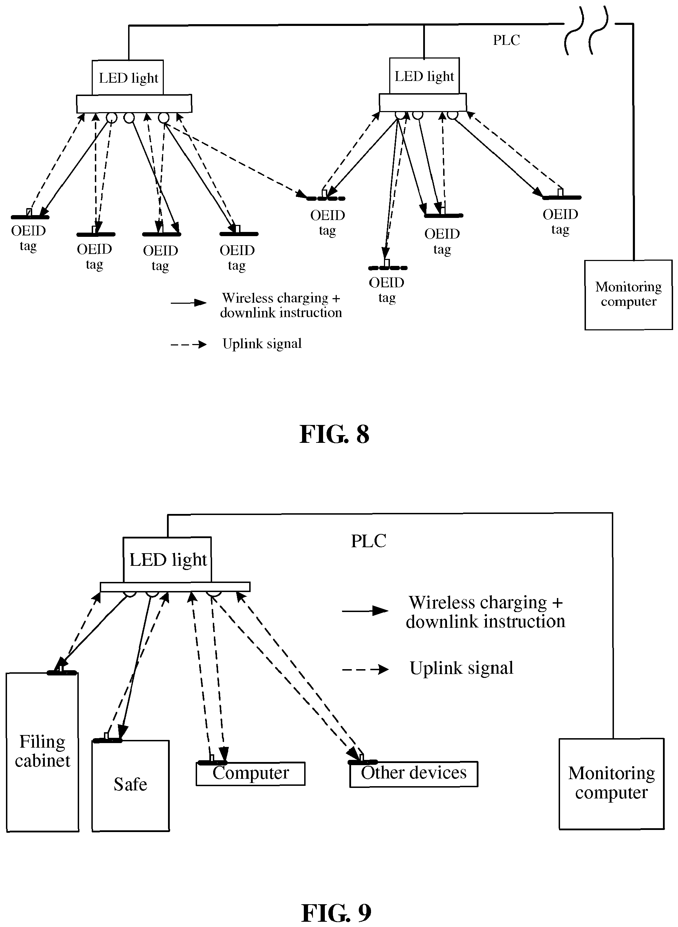

For multiple LED lights in a large room as illustrated in FIG. 8, data read-write may be performed one light after another. In this way, number of items tagged under each light can be clearly learned, and tags can be subjected to read-write repeatedly by two lights can also be learned.

After all the ID data have been subjected to read-write, the LED lights transmit data to a monitoring computer via an electric wire using a PLC mode, and then the data are transmitted to a data center via a network.

Core of embodiments of the present invention is a tag read-write system composed of multiple passive and contactless OEID tags and an LED light. The OEID tags are charged by the LED light or natural light and then are subjected to read-write via an optical wireless communication technology. Additionally, the OEID tags are editable and reusable.

To make the above solution better understood, the above solution provided by embodiments of the present invention will be further described in detail.

FIG. 3 is a schematic diagram illustrating an overall solution of the present invention, where read-write of tag information by using the above solution provided by embodiments of the present invention is initiated by a control chip in an LED light. An OEID tag substantially stores information such as an identity or a location. The information is given by a read-write head and is modifiable by the read-write head. Power for working of the OEID tag is supplied by a photocell of the OEID tag through light converting. The OEID tag may be charged by the LED light or an external light source. It should be noted that the LED light generally does not change ID information of the OEID tag, but merely reads the ID information in most cases, and sometimes may edit the ID information to add a room number, so that there is an advantage that a user can know a transfer process of an item when the item is sent to a destination. Via a P2MP protocol, the LED light reads ID information successively and then edits corresponding ID information. When reading is completed, the LED light transfers corresponding information to a monitoring computer using a PLC mode and then the information is transferred to a background data center via a network.

FIG. 8 is a schematic diagram illustrating an overall solution with multiple LED lights according to an embodiment of the present invention. Different from FIG. 3, FIG. 8 illustrates two indoor LED lights, i.e., two or more indoor LED lights. In this case, the LED lights are sorted by a monitoring computer. Each time only one LED light is subjected to P2MP read-write. When the read-write of one LED light is completed, another LED light is subjected to P2MP read-write, until read-write of all the LED lights is completed. All the read-write data are gathered by the monitoring computer. A same OEID tag may be found to be subjected to read-write by multiple LED lights, so that a location of the item is indicated indirectly. Then the monitoring computer specifies to assign room numbers (i.e., location numbers) to all the OEID tags. Finally, the monitoring computer stores related information for verification and transfers the related information to a network management system or a control center via a network for storing.

FIG. 4 is a schematic diagram illustrating a basic structure of a read-write head of an LED light according to an embodiment of the present invention. As illustrated in FIG. 4, the read-write head is composed of a light transmitter (LED light), a light receiver and a control chip. The LED light is composed of one or more LED chips. Each LED light-transmitting chip has a separate LED driver and transmits a different signal. However, each LED light usually transmits only one type of downlink signal. The signals may be transmitted simultaneously by all the chips or transmitted successively by one chip after another. The light receiver is typically composed of a PIN (or CCD), disposed at periphery of the LED chip and mainly receives a weak uplink signal transmitted by an OEID tag. In order not to affect illumination, the uplink signal is typically infrared light. The micro-control processor is mainly functioned to control an emission state of the LED light, i.e., charging the OEID tag under situation of a continuous light and sending a downlink instruction to the OEID tag under situation of a pulsed light, and process signals received by the light receiver; moreover, the micro-control processor is mainly functioned to execute a P2MP protocol process and perform ordered arrangement for read-write of uplink data, and transmit data in a PLC mode to a monitoring computer and a background data center after data read-write is completed; and the micro-control processor may also receive an instruction from the data center to initiate a read-write process. The data center performs analyzing according to collected data so that storing and moving situation of this indoor item may be monitored.

FIG. 5 is a schematic diagram illustrating components of an OEID tag according to an embodiment of the present invention. As illustrated in FIG. 5, the OEID tag is composed of three modules, i.e., a photovoltaic cell receiver (PVD), an LED light transmitter and an OEID chip. The photovoltaic cell receiver is mainly functioned to convert external light into power and transfer the power to a power management module in the OEID chip; moreover, the photovoltaic cell receiver may further serve as a light receiver to receive a pulsed optical digital signal, convert the pulsed optical digital signal into an electric signal and transfer the electric signal to a signal receiving unit of the OEID chip. The LED light transmitter is mainly functioned to transmit an uplink response signal and is powered by the power management module. The OEID chip includes the power management unit, a signal control processing unit and an information storing unit.

FIG. 6 is a schematic diagram A illustrating components of an OEID chip according to an embodiment of the present invention. As illustrated in FIG. 6, the OEID chip is composed of five units, i.e., a power management unit, a control management unit, a signal transmitting unit, a signal receiving unit and an ID storing unit (information storing unit). These units are integrated into a single chip via a CMOS integration technology. The power management unit is mainly functioned to receive and store power from a PVD, and power the OEID chip and an LED chip. The control management unit manages other units and processes information. The signal transmitting unit mainly supports transmitting an uplink signal to an LED. The signal receiving unit processes a signal transferred from the PVD and transmits the signal to the control management unit. The information storing unit mainly stores tag ID information, and the tag ID information is edited by the control management unit.

FIG. 7 is a schematic diagram B illustrating components of an OEID chip according to an embodiment of the present invention. Different from FIG. 6, here an LED and a solar cell are integrated together into the OEID chip via a CMOS technology. In this way, a tag is integrated with the chip into a whole to form a monolithic integrated tag. This facilitates large-scale manufacturing, reduces manufacturing costs and reduces a loss caused by assembly.

FIG. 9 illustrates implementation of the above methods of embodiments of the present invention. This is a closed indoor environment which mainly is an office, an archive or another important indoor place with safes, filing cabinets, computers and other important items therein. First, OEID tags are arranged on these important items. Then, an LED light is adapted for VLC and PLC transmission, i.e., the LED light is additionally provided with a light receiver and VLC and PLC chips. The LED light is connected to a monitoring computer via the PLC. First, after the LED light is turned on, item checking is initiated by the monitoring computer. After the LED light receives an instruction, a P2MP protocol process is executed via a VLC mode. After receiving a VLC signal, the OEID tag transmits an uplink transmission signal. It should be noted here that, in order not to affect illumination, the OEID tag uses an infrared LED to transmit infrared light. After receiving the signal, the LED light transfers data to the monitoring computer via a PLC mode. The computer stores and collects the data, and may further transfer the data to the data center. The monitoring computer processes the data to determine whether to edit the OEID tag, i.e. whether to add an office ID. If the OEID tag needs to be edited, the LED light may be restarted to perform a read-write process of the tag. If the monitoring computer finds that an item is lost or added, the monitoring computer reports an alarm or reminder.

When entry and exit of items in a warehouse of logistics are managed using the above solutions of embodiments of the present invention, work efficiency is improved. If a room has multiple LED lights, items may be checked with reference to the method of FIG. 3 where each time only one LED light performs read-write.

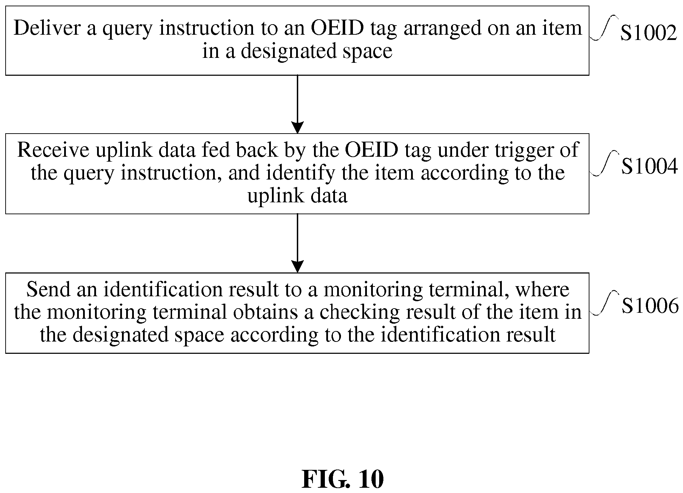

Another embodiment of the present invention provides an item checking handling method. FIG. 10 is a flowchart of the item checking handling method according to an embodiment of the present invention. As illustrated in FIG. 10, the item checking handling method includes following steps.
In step S1002, a query instruction is delivered to an OEID tag arranged on an item in a designated space;
in step S1004, uplink data fed back by the OEID tag under trigger of the query instruction is received, and the item is identified according to the uplink data; and
in step S1006, an identification result is sent to a monitoring terminal, where the monitoring terminal obtains a checking result of the item in the designated space according to the identification result.

The above steps allow a checking result of an item to be obtained according to the uplink data fed back by the OEID tag after the query instruction is delivered to the OEID tag. This solves problems such as great power consumption, a great harm to the human body, a limited working environment, etc. in the RFID tag technology during item checking in the related art, provides contactless and editable read-write for the tag, and satisfies read-write technologies of other tags capable of working normally under various situations.

It should be noted that, for the sake of simplicity, the above method embodiments are described as a series of action combinations. However, it is to be understood by those skilled in the art that the present invention is not limited by the described action sequence, because some steps may be performed in another sequence or at the same time according to the present invention. It is also to be understood by those skilled in the art that embodiments described in the specification are preferred embodiments and that the actions and modules involved are not necessarily necessary for the present invention.

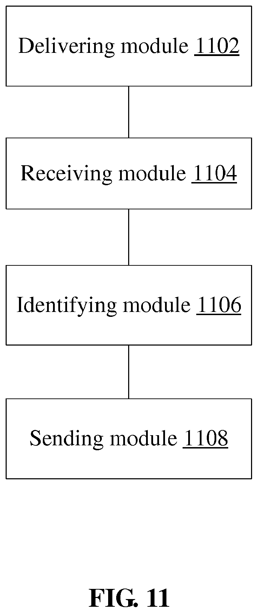

Another embodiment of the present invention provides an item checking handling apparatus that is applicable to an OEID read-write apparatus and is configured to implement the above examples and preferred embodiments. Those that have been described will not be repeated. Modules involved in the item checking handling apparatus will be described below. As used below, the term "module" enables a combination of software and/or hardware of preset functions. The apparatus described in the following embodiment is preferably implemented by software, but implementation by software or by a combination of software and hardware is also possible and conceived. FIG. 11 is another block diagram illustrating a structure of an item checking handling apparatus according to an embodiment of the present invention. As illustrated in FIG. 11, the apparatus includes:
a delivering module 1102, which is configured to deliver a query instruction to an OEID tag arranged on an item in a designated space;
a receiving module 1104, which is configured to receive uplink data fed back by the OEID tag under trigger of the query instruction;
an identifying module 1106, which is configured to identify the item according to the uplink data;
and a sending module 1108, which is configured to send an identification result to a monitoring terminal, where the monitoring terminal obtains a checking result of the item in the designated space according to the identification result.

The combined effect of the above modules allows a checking result of an item to be obtained according to the uplink data fed back by the OEID tag after the query instruction is delivered to the OEID tag. This solves problems such as great power consumption, a great harm to the human body, a limited working environment, etc. in the RFID tag technology during item checking in the related art, provides contactless and editable read-write for the tag, and satisfies read-write technologies of other tags capable of working normally under various situations.

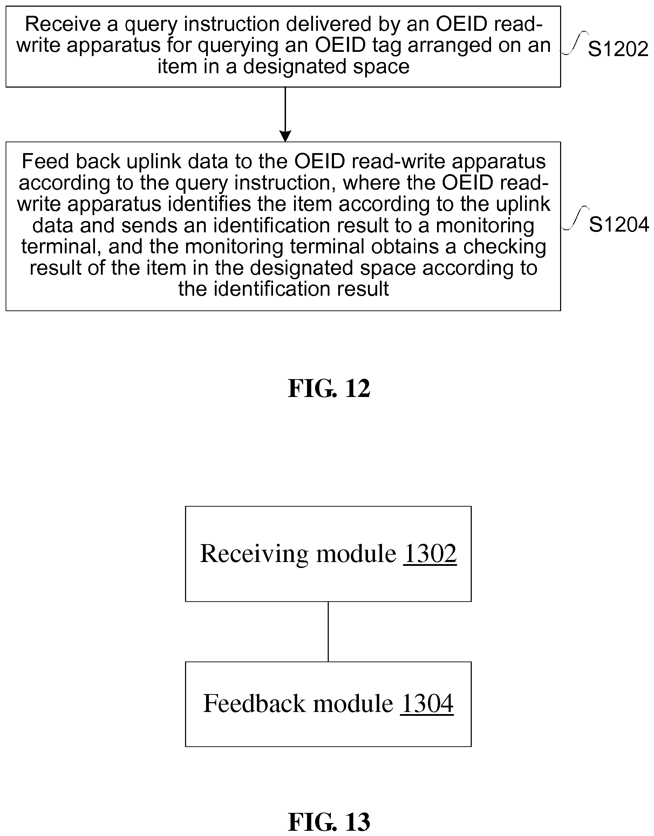

Another embodiment of the present invention provides an item checking handling method. FIG. 12 is another flowchart of the item checking handling method according to an embodiment of the present invention. As illustrated in FIG. 12, the item checking handling method includes following steps.
In step S1202, a query instruction delivered by an OEID read-write apparatus for querying an OEID tag arranged on an item in a designated space is received; and
in step S1204, uplink data are fed back to the OEID read-write apparatus according to the query instruction, where the OEID read-write apparatus identifies the item according to the uplink data and sends an identification result to a monitoring terminal, and the monitoring terminal obtains a checking result of the item in the designated space according to the identification result.

The above steps allow a checking result of an item to be obtained according to the query instruction delivered by the OEID read-write apparatus and the uplink data fed back by the query instruction. This solves problems such as great power consumption, a great harm to the human body, a limited working environment, etc. in the RFID tag technology during item checking in the related art, provides contactless and editable read-write for the tag, and satisfies read-write technologies of other tags capable of working normally under various situations.

Another embodiment of the present invention provides an item checking handling apparatus that is applicable to an OEID tag and is configured to implement the above examples and preferred embodiments. Those that have been described will not be repeated. Modules involved in the item checking handling apparatus will be described below. As used below, the term "module" enables a combination of software and/or hardware of preset functions. The apparatus described in the following embodiment is preferably implemented by software, but implementation by software or by a combination of software and hardware is also possible and conceived. FIG. 13 is a block diagram illustrating a structure of an item checking handling apparatus according to an embodiment of the present invention. As illustrated in FIG. 13, the apparatus includes:
a receiving module 1302, which is configured to receive a query instruction delivered by an OEID read-write apparatus for querying an OEID tag arranged on an item in a designated space; and
a feedback module 1304, which is configured to feed back uplink data to the OEID read-write apparatus according to the query instruction, where the OEID read-write apparatus identifies the item according to the uplink data and sends an identification result to a monitoring terminal, and the monitoring terminal obtains a checking result of the item in the designated space according to the identification result.

The combined effect of the above modules allows a checking result of an item to be obtained according to the query instruction delivered by the OEID read-write apparatus and the uplink data fed back by the query instruction. This solves problems such as great power consumption, a great harm to the human body, a limited working environment, etc. in the RFID tag technology during item checking in the related art, provides contactless and editable read-write for the tag, and satisfies read-write technologies of other tags capable of working normally under various situations.

In view of the above, embodiments of the present invention achieve the effects of solving problems such as great power consumption, a great harm to the human body, a limited working environment, etc. in the RFID tag technology during item checking in the related art, providing contactless and editable read-write for the tag, and satisfying read-write technologies of other tags capable of working normally under various situations.

Another embodiment provides a software for implementing the solutions described in the above-mentioned examples and preferred embodiments.

Another embodiment provides a storing medium, which stores the above-mentioned software, including but not limited to an optical disk, a floppy disk, a hard disk and a rewritable memory.

It is to be noted that the terms "first", "second" and the like in the specification, claims and accompanying drawings of the present invention are used to distinguish similar objects and are not necessarily used to describe a particular order or sequence. It is to be understood that the objects used in this way are interchangeable where appropriate so that embodiments of the present invention described herein may also be implemented in a sequence not illustrated or described herein. In addition, the terms "comprising", "including" or any other variations thereof described herein are intended to encompass a non-exclusive inclusion. For example, a process, method, system, product or device that includes a series of steps or elements not only includes the expressly listed steps or elements but may also include other steps or elements that are not expressly listed or are inherent to such process, method, system, product or device.

Apparently, those skilled in the art should know that each above-mentioned module or step of the present invention may be implemented by a universal computing device, they may be concentrated on a single computing device or distributed on a network formed by a plurality of computing devices, and alternatively, they may be implemented by program codes executable by the computing devices, so that they may be stored in a storing device for execution by the computing devices, and in some circumstances, the illustrated or described steps may be executed in sequences different from those described here, or they may be made into various integrated circuit modules separately, or multiple modules or steps therein may be made into a single integrated circuit module for implementation. Therefore, the present invention is not limited to any specific combination of hardware and software.

The above are only preferred embodiments of the present invention and are not intended to limit the present invention, and for those skilled in the art, the present invention may have various modifications and variations.

### INDUSTRIAL APPLICABILITY

The above solutions provided by embodiments of the present invention are applicable to an item checking process. According to these solutions, the checking result of the item in the current designated space is obtained based on the interaction process of the OEID read-write apparatus, the OEID tag and the monitoring terminal. This solves problems such as great power consumption, a great harm to the human body, a limited working environment, etc. in the RFID tag technology of the related art, provides contactless and editable read-write for the tag, and satisfies read-write technologies of other tags capable of working normally under various situations.

## Claims

1. An item checking system, comprising an optoelectronic identification, OEID, read-write apparatus (10), an optoelectronic identification, OEID, tag (12), and a monitoring terminal (14) wherein the optoelectronic identification, OEID, read-write apparatus (10) is arranged on a light source in a designated space, and is configured to deliver a query instruction to an OEID tag (12) arranged on an item in the designated space via a light signal transmitted by the light source, identify the item according to uplink data fed back by the OEID tag (12), and send an identification result to a monitoring terminal (14); **characterized in that** the OEID read-write apparatus (10) is further configured to transmit light to charge the OEID tag or transmit pulsed light to the OEID tag (12) to deliver corresponding data signals; wherein the OEID tag (12) comprises a photocell, a light transmitter and an OEID chip, and the OEID tag (12) is configured to send the uplink data to the OEID read-write apparatus (10) under trigger of the query instruction; and
the monitoring terminal (14) is configured to obtain a checking result of the item in the designated space according to the identification result.

2. The system according to claim 1, wherein one OEID read-write apparatus (10) corresponds to one or more OEID tags (12).

3. The system according to claim 2, wherein the OEID read-write apparatus (10) is further configured to read, when one OEID read-write apparatus (10) corresponds to a plurality of OEID tags (12), an ID identifying the item in the OEID tag (12) until traversal for the plurality of OEID tags (12) are finished.

4. The system according to any one of claims 1 to 3, wherein the OEID read-write apparatus (10) comprises a light signal transmitter, a light signal receiver and a control chip which controls running status of the light signal transmitter and the light signal receiver.

5. The system according to any one of claims 1 to 3, wherein the OEID tag (12) is further provided with geographic location information of the item, wherein the geographic location information comprises an identification of the designated space where the item located.

6. The system according to claim 5, wherein the OEID read-write apparatus (10) is further configured to broadcast the geographic location information to the OEID tag (12), and the OEID tag (12) is further configured to add the geographic location information into the OEID tag (12).

7. An item checking handling method, for an optoelectronic identification. OEID, read-write apparatus (10), comprising:
delivering a query instruction to an OEID tag (12) arranged on an item in a designated space, wherein the OEID tag (12) comprises a photocell, a light transmitter and an OEID chip;
receiving uplink data fed back by the OEID tag (12) under trigger of the query instruction, and identifying the item according to the uplink data; and
sending an identification result to a monitoring terminal (14), wherein the monitoring terminal (14) obtains a checking result of the item in the designated space according to the identification result.

8. An item checking handling method, for an OEID tag (12), comprising
receiving (S1202) a query instruction delivered by an OEID read-write apparatus (10) for querying an OEID tag (12) arranged on an item in a designated space, wherein the OEID tag (12) comprises a photocell, a light transmitter and an OEID chip; and
feeding (S 1204) back uplink data to the OEID read-write apparatus (10) according to the query instruction, wherein the OEID read-write apparatus (10) identifies the item according to the uplink data and sends an identification result to a monitoring terminal (14), and the monitoring terminal (14) obtains a checking result of the item in the designated space according to the identification result.

## Patentansprüche

1. Artikelkontrollsystem, umfassend eine Lese-Schreib-Vorrichtung (10) zur optoelektronischen Identifizierung, OEID, eine Markierung (12) zur optoelektronischen Identifizierung, OEID, und ein Überwachungsendgerät (14), wobei die Lese-Schreib-Vorrichtung (10) zur optoelektronischen Identifizierung, OEID, an einer Lichtquelle in einem ausgewiesenen Raum angeordnet ist und konfiguriert ist, um eine Abfrageanweisung an eine OEID-Markierung (12), die an einem Artikel in dem ausgewiesenen Raum angeordnet ist, über ein Lichtsignal zu liefern, das durch die Lichtquelle übertragen wird, den Artikel gemäß Uplink-Daten zu identifizieren, die durch die OEID-Markierung (12) zurückgeführt werden, und ein Identifizierungsergebnis an ein Überwachungsendgerät (14) zu senden;
**dadurch gekennzeichnet, dass** die OEID-Lese-Schreib-Vorrichtung (10) ferner konfiguriert ist, um Licht zu übertragen, um die OEID-Markierung zu laden, oder gepulstes Licht an die OEID-Markierung (12) zu übertragen, um entsprechende Datensignale zu liefern; wobei die OEID-Markierung (12) eine Fotozelle, einen Lichtsender und einen OEID-Chip umfasst, und die OEID-Markierung (12) konfiguriert ist, um die Uplink-Daten an die OEID-Lese-Schreib-Vorrichtung (10) unter Auslösung der Suchanfrage zu senden; und
das Überwachungsendgerät (14) konfiguriert ist, um ein Kontrollergebnis des Artikels in dem ausgewiesenen Raum gemäß dem Identifizierungsergebnis zu erhalten.

2. System nach Anspruch 1, wobei eine OEID-Lese-Schreib-Vorrichtung (10) einer oder mehreren OEID-Markierungen (12) entspricht.

3. System nach Anspruch 2, wobei die OEID-Lese-Schreib-Vorrichtung (10) ferner konfiguriert ist, um, wenn eine OEID-Lese-Schreib-Vorrichtung (10) einer Vielzahl von OEID-Markierungen (12) entspricht, eine ID zu lesen, die den Artikel in der OEID-Markierung (12) identifiziert, bis Traversierung für die Vielzahl von OEID-Markierungen (12) abgeschlossen ist.

4. System nach einem der Ansprüche 1 bis 3, wobei die OEID-Lese-Schreib-Vorrichtung (10) einen Lichtsignalsender, einen Lichtsignalempfänger und einen Kontrollchip umfasst, der Ausführungsstatus des Lichtsignalsenders und des Lichtsignalempfängers kontrolliert.

5. System nach einem der Ansprüche 1 bis 3, wobei der OEID-Markierung (12) ferner Informationen über den geographischen Standort des Artikels bereitgestellt werden, wobei die Informationen über den geographischen Standort eine Identifizierung des ausgewiesenen Raums umfassen, an dem sich der Artikel befindet.

6. System nach Anspruch 5, wobei die OEID-Lese-Schreib-Vorrichtung (10) ferner konfiguriert ist, um die Informationen über den geographischen Standort an die OEID-Markierung (12) zu übersenden, und die OEID-Markierung (12) ferner konfiguriert ist, um die Informationen über den geographischen Standort der OEID-Markierung (12) hinzuzufügen.

7. Handhabungsverfahren der Artikelkontrolle für eine Lese-Schreib-Vorrichtung (10) zur optoelektronischen Identifizierung, OEID, umfassend:
Liefern einer Abfrageanweisung an eine OEID-Markierung (12), die an einem Artikel in einem ausgewiesenen Raum angeordnet ist, wobei die OEID-Markierung (12) eine Fotozelle, einen Lichtsender und einen OEID-Chip umfasst;
Empfangen von Uplink-Daten, die durch die OEID-Markierung (12) zurückgeführt werden, unter Auslösung der Abfrageanweisung, und Identifizieren des Artikels gemäß den Uplink-Daten; und
Senden eines Identifizierungsergebnisses an ein Überwachungsendgerät (14), wobei das Überwachungsendgerät (14) ein Kontrollergebnis des Artikels in dem ausgewiesenen Raum gemäß dem Identifizierungsergebnis erhält.

8. Handhabungsverfahren der Artikelkontrolle für eine OEID-Markierung (12), umfassend
Empfangen (S1202) einer Abfrageanweisung, die durch eine OEID-Lese-Schreib-Vorrichtung (10) geliefert wird, um eine OEID-Markierung (12) abzufragen, die an einem Artikel in einem ausgewiesenen Raum angeordnet ist, wobei die OEID-Markierung (12) eine Fotozelle, einen Lichtsender und einen OEID-Chip umfasst; und
Zurückführen (S1204) von Uplink-Daten an die OEID-Lese-Schreib-Vorrichtung (10) gemäß der Abfrageanweisung, wobei die OEID-Lese-Schreib-Vorrichtung (10) den Artikel gemäß den Uplink-Daten identifiziert und ein Identifizierungsergebnis an ein Überwachungsendgerät (14) sendet, und das Überwachungsendgerät (14) ein Kontrollergebnis des Artikels in dem ausgewiesenen Raum gemäß dem Identifizierungsergebnis erhält.

## Revendications

1. Système de vérification d'articles, comprenant un appareil de lecture-écriture d'identification optoélectronique, OEID, (10), une étiquette d'identification optoélectronique, OEID, (12), et un terminal de surveillance (14), dans lequel l'appareil de lecture-écriture d'identification optoélectronique, OEID, (10) est agencé sur une source lumineuse dans un espace désigné, et est configuré pour fournir une instruction d'interrogation à une étiquette OEID (12) agencée sur un article dans l'espace désigné via un signal lumineux transmis par la source lumineuse, identifier l'article en fonction de données de liaison montante retournées par l'étiquette OEID (12), et envoyer un résultat d'identification à un terminal de surveillance (14) ;
**caractérisé en ce que** l'appareil de lecture-écriture OEID (10) est en outre configuré pour transmettre une lumière pour charger l'étiquette OEID ou transmettre une lumière puisée à l'étiquette OEID (12) pour fournir des signaux de données correspondants ; dans lequel l'étiquette OEID (12) comprend une cellule photoélectrique, un émetteur de lumière et une puce OEID, et l'étiquette OEID (12) est configurée pour envoyer les données de liaison montante à l'appareil de lecture-écriture OEID (10) lors d'un déclenchement de l'instruction d'interrogation ; et
le terminal de surveillance (14) est configuré pour obtenir un résultat de vérification de l'article dans l'espace désigné en fonction du résultat d'identification.

2. Système selon la revendication 1, dans lequel un appareil de lecture-écriture OEID (10) correspond à une ou plusieurs étiquettes OEID (12).

3. Système selon la revendication 2, dans lequel l'appareil de lecture-écriture OEID (10) est en outre configuré pour lire, lorsqu'un appareil de lecture-écriture OEID (10) correspond à une pluralité d'étiquettes OEID (12), un ID identifiant l'article dans l'étiquette OEID (12) jusqu'à ce que la traversée de la pluralité d'étiquettes OEID (12) soit terminée.

4. Système selon l'une quelconque des revendications 1 à 3, dans lequel l'appareil de lecture-écriture OEID (10) comprend un émetteur de signal lumineux, un récepteur de signal lumineux et une puce de commande qui commande le statut de fonctionnement de l'émetteur de signal lumineux et du récepteur de signal lumineux.

5. Système selon l'une quelconque des revendications 1 à 3, dans lequel l'étiquette OEID (12) est en outre pourvue d'informations d'emplacement géographique de l'article, dans lequel les informations d'emplacement géographique comprennent une identification de l'espace désigné où se trouve l'article.

6. Système selon la revendication 5, dans lequel l'appareil de lecture-écriture OEID (10) est en outre configuré pour diffuser les informations d'emplacement géographique à l'étiquette OEID (12), et l'étiquette OEID (12) est en outre configurée pour ajouter les informations d'emplacement géographique dans l'étiquette OEID (12).

7. Procédé de gestion de vérification d'articles, pour un appareil de lecture-écriture d'identification optoélectronique, OEID, (10), comprenant :
la fourniture d'une instruction d'interrogation à une étiquette OEID (12) agencée sur un article dans un espace désigné, dans lequel l'étiquette OEID (12) comprend une cellule photoélectrique, un émetteur de lumière et une puce OEID ;
la réception de données de liaison montante retournées par l'étiquette OEID (12) lors d'un déclenchement de l'instruction d'interrogation, et l'identification de l'article en fonction des données de liaison montante ; et
l'envoi d'un résultat d'identification à un terminal de surveillance (14), dans lequel le terminal de surveillance (14) obtient un résultat de vérification de l'article dans l'espace désigné en fonction du résultat d'identification.

8. Procédé de gestion de vérification d'articles, pour une étiquette OEID (12), comprenant :
la réception (S1202) d'une instruction d'interrogation fournie par un appareil de lecture-écriture OEID (10) pour interroger une étiquette OEID (12) agencée sur un article dans un espace désigné, dans lequel l'étiquette OEID (12) comprend une cellule photoélectrique, un émetteur de lumière et une puce OEID ; et
le retour (S1204) de données de liaison montante à l'appareil de lecture-écriture OEID (10) en fonction de l'instruction d'interrogation, dans lequel l'appareil de lecture-écriture OEID (10) identifie l'article en fonction des données de liaison montante et envoie un résultat d'identification à un terminal de surveillance (14), et le terminal de surveillance (14) obtient un résultat de vérification de l'article dans l'espace désigné en fonction du résultat d'identification.
